# EUROPEAN PATENT APPLICATION

(11) **EP 4 082 341 A1**
(43) Date of publication of application: **02.11.2022**
(21) Application number: 20904720.8
(22) Date of filing: 25.12.2020
(51) Int. Cl.: A01P 21/00, A01N 65/12

(54) **PLANT PHOTOSYNTHESIS PROMOTION AGENT**

(30) Priority: 28.12.2019 JP 2019239994
(71) Applicant: OAT Agrio Co., Ltd., Tokyo 101-0052 (JP)
(72) Inventor: KITO, Keijiro, Naruto-shi, Tokushima 779-0301 (JP); NAITO, Atsushi, Naruto-shi, Tokushima 779-0301 (JP); IWAI, Sumio, Kagoshima-shi, Kagoshima 890-8580 (JP); ONJO, Michio, Kagoshima-shi, Kagoshima 890-8580 (JP)
(74) Representative: Lederer & Keller Patentanwälte Partnerschaft mbB
(86) International application number: PCT/JP2020/048950
(87) International publication number: WO 2021/132642

(57) **Abstract**

It is an object of the present invention to provide a plant photosynthesis promoting agent that is inexpensive and has an excellent photosynthesis promoting effect. The present invention relates to a plant photosynthesis promoting agent comprising stevia.

## Description

### Technical Field

The present invention relates to a plant photosynthesis promoting agent.

### Background Art

Photosynthesis is a biochemical reaction for converting light energy into chemical energy, mainly performed by plants, phytoplankton, algae, and other organisms with photosynthetic pigments. Crops use light energy to synthesize sugars, such as sucrose, starch, and the like, from water and carbon dioxide in the air. Photosynthesis simultaneously supplies, into the atmosphere, oxygen produced in the process of decomposing water.

The sugars produced by photosynthesis are transported through the leaf veins and the like to various parts of the crop body, where they are changed into complex organic substances, such as carbohydrates, proteins, and fats. These organic substances are then used to sustain the lives of crops themselves, and are stored in seeds, fruits, stems, roots, and the like. In other words, the photosynthetic capacity of crops is a factor that directly affects the growth and yield.

Therefore, enhancing the photosynthetic activity can be expected to improve the quality of the crops to be harvested, for example.

On the other hand, to promote crop growth and improve the yield, it is necessary to supply nutrients by the application of fertilizer, and constantly maintain and manage the growing environment and the like in a favorable condition.

However, such maintenance and management is not only time-consuming, but also requires equipment and facilities for this purpose.

For example, Patent Literature 1 discloses a photosynthesis promoting system characterized in that the temperature and humidity in a greenhouse are adjusted, and then a plant is irradiated with light, and carbon dioxide gas is locally applied there; and a photosynthesis promoting apparatus for use in the system. However, installation of this whole apparatus requires a huge capital investment, and also results in complicated cultivation management.

Patent Literature 2 discloses a method of promoting photosynthesis characterized in that low-frequency stimulation is applied to a plant. However, carrying out this method of promoting photosynthesis requires equipment and facilities such as a source of generation of low-frequency signals, a signal amplifier, and the like, which leads to the problem of increased costs for equipment installation.

Accordingly, there is a desire for the development of a method that can promote photosynthesis in a plant easily and inexpensively, and a compound (agent) that promotes photosynthesis.

### Citation List

### Patent Literature

Patent Literature 1: JP 2016-54713 A
Patent Literature 2: JP 2004-89031 A

### Summary of Invention

### Technical Problem

It is an object of the present invention to provide a plant photosynthesis promoting agent that is inexpensive and has an excellent photosynthesis promoting effect.

### Solution to Problem

As a result of extensive research, the inventors of the present invention have found that the photosynthesis promoting effect is achieved by treating crops with a liquid containing a component derived from stevia, which is a raw material of sweeteners. The present invention has been completed as a result of further research based on these findings.

In summary, the present invention is as set forth below.

### Item 1.

A plant photosynthesis promoting agent comprising stevia.

### Item 2.

The plant photosynthesis promoting agent according to item 1, wherein the stevia is at least one selected from the group consisting of steviol compounds, stevia extracts, and enzyme-treated stevia.

### Item 3.

The plant photosynthesis promoting agent according to item 1 or 2, wherein the stevia is at least one selected from the group consisting of steviol, stevioside, rebaudioside A, rebaudioside B, rebaudioside C, rebaudioside D, rebaudioside E, rebaudioside F, rebaudioside M, steviolbioside, rubusoside, and dulcoside.

Item 4. The plant photosynthesis promoting agent according to item 1 or 2, wherein the stevia is a stevia extract.

### Item 5.

The plant photosynthesis promoting agent according to item 1 or 2, wherein the stevia is enzyme-treated stevia.

### Item 6.

The plant photosynthesis promoting agent according to item 1 or 2, wherein the stevia is rebaudioside.

### Item 7.

A method of promoting photosynthesis in a plant, using the plant photosynthesis promoting agent according to any one of items 1 to 6 on a plant or in a soil or a culture medium in which the plant is grown.

### Item 8.

A method of applying the plant photosynthesis promoting agent according to any one of items 1 to 6 to a plant.

### Advantageous Effects of Invention

The present invention can provide a plant photosynthesis promoting agent comprising stevia.

### Brief Description of Drawings

Fig. 1 is a graph showing the results of evaluation performed using cucumbers, on the photosynthesis promoting activity provided by FARM A.
Fig. 2 is a graph showing the results of evaluation performed using sweet potatoes, on the photosynthesis promoting activity provided by Steviron TK.

### Description of Embodiments

### Stevia

Stevia (scientific name: *Stevia rebaudiana* L.) is a perennial plant in the genus *Stevia* of the family *Asteraceae* native to South America, which is used worldwide as a natural sweetener, a food additive, or the like. Stevia typically has a height of about 50 cm to 1 m, and the stem is covered with white fine hairs. Stevia is also named sweetleaf stevia.

As used herein, "stevia" includes the leaves, stems, and/or roots of natural stevia (hereinafter also referred to as "natural stevia"); a stevia powder obtained by making natural stevia into a powder; a component contained in natural stevia (compound isolated from stevia; hereinafter also referred to as "isolated component"); an extract from natural stevia (hereinafter also referred to as "stevia extract"); residue of such a stevia extract; and a product obtained by treating the isolated component or the stevia extract (hereinafter also referred to as "stevia-treated product or stevia derivative).

Examples of the component contained in natural stevia (isolated component) include steviol or derivatives thereof.

Of steviol compounds represented by general formula (1): 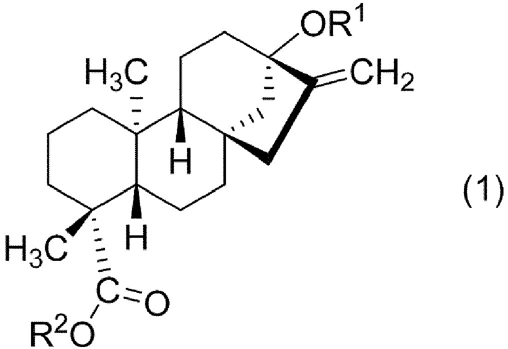
wherein R¹ and R² are the same or different, and each represents a hydrogen atom, a monosaccharide, a disaccharide, a trisaccharide, a tetrasaccharide, an oligosaccharide, a sugar alcohol, or an amino sugar;
steviol is a compound wherein R¹ and R² each represent a hydrogen atom.

Steviol derivatives are not limited as long as they are compounds derived from steviol, and examples include compounds of the steviol compounds represented by general formula (1), wherein R¹ and R² are the same or different, and each represent a hydrogen atom, a monosaccharide, a disaccharide, a trisaccharide, a tetrasaccharide, an oligosaccharide, a sugar alcohol, or an amino sugar (excluding the compound of general formula (1) wherein R¹ and R² each represent a hydrogen atom (steviol)).

Examples of monosaccharides include:
trioses such as a ketotriose (dihydroxyacetone) and an aldotriose (glyceraldehyde);
tetroses such as a ketotetrose (erythrulose) and an aldotetrose (erythrose or threose);
pentoses such as a ketopentose (ribulose or xylulose), an aldopentose (ribose, arabinose, xylose, or lyxose), and a deoxysugar (deoxyribose);
hexoses such as a ketohexose (psicose, fructose, sorbose, or tagatose), an aldohexose (allose, altrose, glucose, mannose, glucose, idose, galactose, or talose), and a deoxysugar (fucose, fuculose, or rhamnose);
heptoses such as sedoheptulose; or derivatives thereof.

Examples of disaccharides include disaccharides such as sucrose, lactose, maltose, trehalose, turanose, and cellobiose; or derivatives thereof.

Examples of trisaccharides include trisaccharides such as raffinose, melezitose, and maltotriose; or derivatives thereof.

Examples of tetrasaccharides include tetrasaccharides such as acarbose and stachyose; or derivatives thereof.

Examples of oligosaccharides include oligosaccharides such as fructooligosaccharides (FOS), galactooligosaccharides (GOS), mannanoligosaccharides (MOS); or derivatives thereof.

Sugar alcohols are a type of sugars produced by the reduction of the carbonyl group of an aldose or a ketose, and examples include tetritols such as erythritol and threitol; pentitols such as arabitol, xylitol, and ribitol; hexitols such as iditol, galactitol, glucitol, and mannitol; heptitols such as volemitol and perseitol; maltitol; or derivatives thereof.

Amino sugars are sugars containing an amino group (amine), and examples include glucosamine, N-acetylglucosamine, N-acetylmuramic acid, galactosamine, N-acetylgalactosamine, mannosamine, N-acetylmannosamine, neuraminic acid, N-acetylneuraminic acid, daunosamine, fructosamine, hexosamine, ketosamine, muramyl dipeptide, perosamine, sialic acid; or derivatives thereof.

These monosaccharides, disaccharides, trisaccharides, tetrasaccharides, oligosaccharides, sugar alcohols, amino sugars, or derivatives thereof may be used alone or as a mixture.

A disaccharide, a trisaccharide, a tetrasaccharide, and an oligosaccharide each refer to a polymer of any two or more of the above-mentioned monosaccharides linked by glycosidic bonds.

Steviol also encompasses salts thereof.

Examples of salts of steviol include salts of steviol compounds with organic acids, inorganic acids, inorganic bases, or organic bases.

Examples of inorganic acids include hydrochloric acid, sulfuric acid, and phosphoric acid.

Examples of organic acids include carboxylic acids such as propionic acid, glycolic acid, lactic acid, hydroxybutyric acid, malic acid, maleic acid, malonic acid, salicylic acid, fumaric acid, succinic acid, adipic acid, tartaric acid, citric acid, glutaric acid, and 2- or 3-glycerophosphoric acid; phosphonic acids, and sulfonic acids.

Examples of inorganic bases include alkali metals such as sodium, potassium, and lithium; alkaline earth metals such as calcium, and ammonia.

Examples of organic bases include alkylamines (such as C1-6 alkylamines), hydroxyalkylamines (such as hydroxy C1-6 alkylamines), N-methylglucamine, benzylamine, piperidine, and pyrrolidine.

These steviol compounds may be components contained in natural stevia as mentioned above (isolated components), or may be produced by chemical synthesis.

Specific examples of the steviol compounds represented by general formula (1) include steviol, stevioside, rebaudioside A, rebaudioside B, rebaudioside C, rebaudioside D, rebaudioside E, rebaudioside F, rebaudioside G, rebaudioside H, rebaudioside I, rebaudioside J, rebaudioside K, rebaudioside L, rebaudioside M, rebaudioside N, rebaudioside O, dulcoside, steviolbioside, and rubusoside.

Of these steviol compounds, compounds other than steviol (compound of general formula (1) wherein R¹ and R² are each a hydrogen atom) may also be referred to as glycosides with the steviol backbone, i.e., "steviol glycosides". One or more of the steviol compounds may be used.

### Stevia Extract

The stevia extract is not limited as long as it is extracted from stevia of the family *Asteraceae.* Examples of the stevia extract include an extract obtained by extraction of the plant body (including the leaves, stems, and roots) of stevia at room temperature to hot water; and a purified product of the extract. Such a stevia extract may be used alone or in the form of a diluted liquid including a solution, a powder, granules, or the like. One or more of such stevia extracts may be used. Commercial stevia extracts may also be used. Examples of commercial stevia extracts include FARM A (registered trademark, manufactured by OAT Agrio Co., Ltd.) and Steviron (registered trademark) TK (manufactured by Morita Kagaku Kogyo Co., Ltd.).

### Stevia-Treated Product

The stevia-treated product (also referred to as stevia derivative) refers to a component obtained by subjecting natural stevia, a component obtained from stevia (isolated component or isolated compound), or a stevia extract to chemical treatment or enzyme treatment.

Of the above, a compound obtained by enzyme treatment of stevia (hereinafter referred to as "enzyme-treated stevia") is not limited as long as it is a treated product obtained by treating stevia or a stevia extract with an enzyme. Examples of the enzyme-treated stevia include a treated product obtained by adding glucose to the stevia extract using α-glucosyltransferase or the like. One or more types of such enzyme-treated stevia may be used.

As used herein, "stevia" encompasses one stevia component or a stevia composition containing two or more stevia components, a stevia extract, and one or more types of enzyme-treated stevia, as well as mixtures thereof.

Preferred as the stevia are steviol, stevioside, rebaudioside A, rebaudioside B, rebaudioside C, rebaudioside D, rebaudioside E, rebaudioside F, rebaudioside M, steviolbioside, rubusoside, dulcoside, and a stevia extract; more preferred are steviol, stevioside, rebaudioside A, rebaudioside B, rebaudioside D, rebaudioside E, rebaudioside M, steviolbioside, rubusoside, dulcoside, and a stevia extract; and particularly preferred are steviol, stevioside, rebaudioside A, and a stevia extract.

The stevia used in the present invention can promote photosynthesis in a plant. Thus, at least one selected from the group consisting of stevia, stevia extracts, and enzyme-treated stevia may be used as an active ingredient in the plant photosynthesis promoting agent.

Plants for which the plant photosynthesis promoting agent of the present invention is used are not limited as long as they are terrestrial plants that perform photosynthesis. Examples of plants for which the plant photosynthesis promoting agent of the present invention can be used include, but are not limited to:
grains, such as rice, barley, wheat, rye, oats, and maize;
legumes, such as soybeans, adzuki beans, broad beans, green peas, kidney beans, and peanuts;
fruit trees and fruits, such as apples, citruses, pears, grapes, peaches, plums, cherries, walnuts, chestnuts, almonds, bananas, and strawberries;
leaf and fruit vegetables, such as cabbage, tomatoes, spinach, broccoli, lettuce, onions, green onions, green peppers, eggplants, and peppers;
root vegetables, such as carrots, potatoes, sweet potatoes, taro, Japanese radish, lotus roots, turnips, burdock, and garlic;
crops for processing use, such as cotton, hemp, beets, hops, sugar cane, sugar beets, olives, gum, coffee, tobacco, and tea;
cucurbits, such as pumpkins, cucumbers, oriental melon, watermelons, and melons;
pasture grasses, such as orchardgrass, sorghum, timothy, clover, and alfalfa;
grasses, such as *Zoysia tenuifolia* and bentgrass;
flavoring and ornamental crops, such as lavender, rosemary, thyme, parsley, pepper, and ginger;
flowers and ornamental plants, such as chrysanthemums, roses, carnations and orchids;
garden trees, such as ginkgo, *Prunus* species, and *Aucuba japonica*; and
forest trees, such as *Abies sachalinensis* species, *Picea jezoensis* species, *Pinus* species, hiba cedar, Japanese cedar, and Japanese cypress.

While the plant photosynthesis promoting agent of the present invention may contain the above-described active ingredient alone, it may also contain various additives in addition to the active ingredient, depending on the below-described dosage form, mode of application, and the like. The content of the active ingredient in the plant photosynthesis promoting agent may be determined appropriately according to the below-described dosage form, mode of application, and the like. For example, the concentration of the steviol compound in the plant photosynthesis promoting agent of the present invention is typically, for example, about 0.0002 to 200,000 mg/mL, preferably about 0.002 to 20,000 mg/mL, and more preferably about 0.02 to 2,000 mg/mL.

Dosage forms of the plant photosynthesis promoting agent of the present invention are not limited as long as they are agriculturally acceptable dosage forms, and examples include liquids, solids, powders, granules, particles, wettable powders, flowable agents, emulsions, pastes, and dispersants.

Additives are not limited as long as they are agriculturally acceptable additives, and examples include carriers, surfactants, thickeners, fillers, binding agents, vitamins, antioxidants, pH adjusters, volatilization inhibitors, and pigments.

Modes of application of the plant photosynthesis promoting agent of the present invention are not limited as long as they are known modes of using pesticides (or such modes that may be developed in the future), and examples include spraying, dropwise addition, application, and mixing or dissolving into plant growth environments (such as in soils, in water, in solid media, in liquid media, or in culture media).

The present invention encompasses a method of promoting photosynthesis in a plant, using the above-described plant photosynthesis promoting agent on a plant or in a soil or a culture medium in which the plant is grown. By using this method, photosynthesis in a plant can be promoted easily and inexpensively. The present invention also encompasses a method of using stevia as the plant photosynthesis promoting agent.

### Examples

The present invention will be more specifically described hereinafter, based on examples and test examples, although the technical scope of the present invention is not limited to these examples.

### Materials (Raw Materials)

In Example 1, trade name: FARM A (registered trademark) (manufactured by OAT Agrio Co., Ltd.) was used as stevia.

FARM A is a product obtained by mixing above-ground parts of stevia plants and water at a predetermined ratio, heating the mixture, and then subjecting the liquid phase obtained by centrifugating the mixture to vacuum concentration, followed by fermentation of the concentrate for a predetermined time. FARM A is a stevia extract and a stevia-treated product, and contains steviol compounds, as shown in Test Example 3.

In Example 2, trade name: Steviron (registered trademark) TK (manufactured by Morita Kagaku Kogyo Co., Ltd.) was used as stevia.

Steviron TK is a stevia extract; it is a sweetener containing 80% or more of steviol glycosides.

### (Example 1)

### Stevia Formulation 1

Water was added to 2 mL of FARM A and 200 µL of Tween (registered trademark) 80 (manufactured by Tokyo Chemical Industry Co., Ltd.) as a spreading agent to give a final volume of 2 L to obtain a stevia formulation 1.

### (Comparative Example 1)

### Comparative Formulation 1

A comparative formulation 1 was obtained as in Example 1, except that FARM A was excluded.

### (Example 2)

### Stevia Formulation 2

Water was added to 2 mL of a fertilizer solution containing a predetermined amount of Steviron TK, and containing 2% of MgO, 0.5% of WB (water-soluble boron), 0.2% of WMn (water-soluble manganese), 3% of WCa (water-soluble calcium), 0.2% of Fe, 0.05% of Cu, and 0.2% of Zn as fertilizer components, and 0.4 mL of a silicone-based spreading agent (trade name: Makupika (registered trademark), manufactured by ISK BIOSCIENCES K.K., polyoxyethylene methylpolysiloxane) to give a final volume of 2 L to obtain a stevia formulation 2.

### (Comparative Example 2)

### Comparative Formulation 2

A comparative formulation 2 was obtained as in Example 2, except that 2 mL of the fertilizer solution containing Steviron TK was excluded.

### Test Example 1: Evaluation of the photosynthesis promoting activity using the stevia formulation 1 and comparative formulation 1

On November 1, 2017, cucumber seedlings (cultivar: scion; Excellent 620, rootstock; YuyuIkki) purchased from Takeuchi Engei, Y. K. were planted in a single row at a spacing of 50 cm between plants in the isolated bed of greenhouse No. 4 at the Cultivation Research Center of OAT Agrio Co., Ltd. After planting, TANK MIX (registered trademark) AB, Youekidokou No. 6, or OK-F-3 (manufactured by OAT Agrio Co., Ltd.) was used as a base fertilizer, and the concentration of supplied water was adjusted to give a soil solution EC value of 1.5 to 2.0 dS/m. The amount of supplied water was set such that a small amount of drainage was observed. The plants were vertically trained with three secondary vines.

On December 5, the stevia formulation 1 and the comparative formulation 1 were prepared.

Each of the stevia formulation 1 and the comparative formulation 1 was sprayed evenly onto the whole above-ground parts of five crops of cucumbers.

From 10:00 a.m. to 12:00 p.m. on the following day, the 6th, the photosynthetic rate of the tenth leaf was measured using the plant photosynthesis comprehensive analysis system LI-6800 (manufactured by LI-COR, Inc.). Measurements were performed alternately on the plants treated with the stevia formulation 1 and the comparative formulation 1. The light intensity within the chamber of the plant photosynthesis comprehensive analysis system was set to 250 µmol/m²/s, 500 µmol/m²/s, 1,000 µmol/m²/s, or 1,500 µmol/m²/s, the CO₂ concentration to 400 µmol/mol, the temperature to 20°C, the humidity to 80%, and the air-flow rate to 800 µmol/s.

Of the five measured results, three values, excluding the maximum and minimum values, were collected from a total of three plants for each treatment condition, and used for analysis.

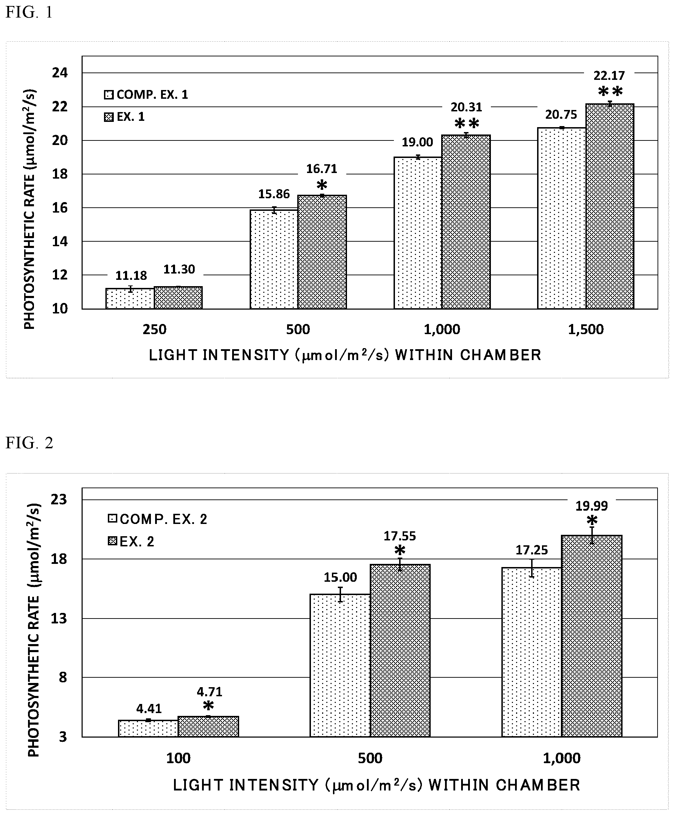

Comparative analysis was performed using student's t-test between the measured results of the plants treated with the comparative formulation 1 (Comparative Example 1) and the measured results of the plants treated with the stevia formulation 1 (Example 1). The results are shown in Table 1 and Fig. 1. The measurement values in the table are shown as mean ± standard deviation.

In the figure, ^{∗∗} indicates that P<0.01, and ^{∗} indicates that P<0.05, as a result of the analysis.

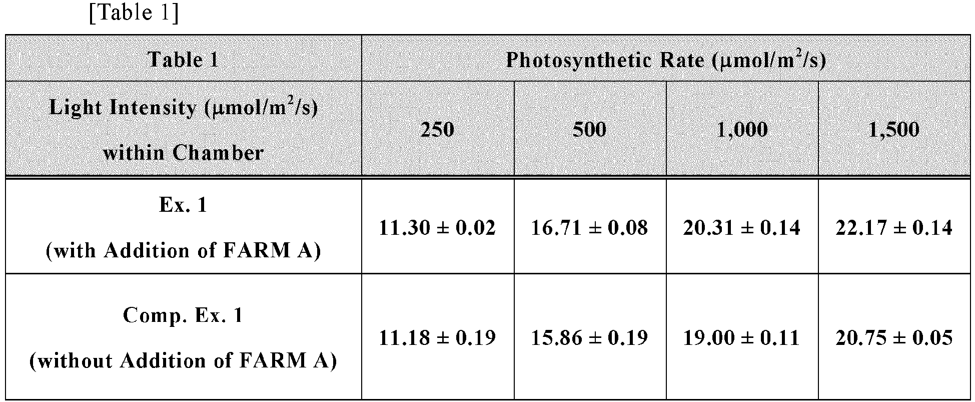

### <Results>

In Example 1 with the addition of FARM A, an improvement in photosynthetic rate was observed at every light intensity within the chamber, as compared to Comparative Example 1 (without the addition of FARM A). This has revealed that the plant photosynthesis promoting agent of the present invention, which contains stevia, promotes photosynthesis of cucumbers.

### Test Example 2: Evaluation of the photosynthesis promoting activity using the stevia formulation 2 and comparative formulation 2

On April 23, 2019, sweet potato seedlings (cultivar: Beniharuka) were planted at a spacing of 20 to 30 cm between plants in a field at the Faculty of Agriculture, Kagoshima University (ridge spacing: 100 cm; ridge height: 30 cm; ridges covered with a white vinyl mulch; 4 kg of nitrogen, 6 kg of phosphoric acid, and 10 kg of potassium applied per 10 a (are)).

On August 26, each of the stevia formulation 2 and the comparative formulation 2 was sprayed evenly at about 200 mL/plant onto the above-ground parts of ten crops.

From 8:00 a.m. to 11:00 a.m. on the following day, the 27th, areas of individual leaves without feeding damage and not in shade were measured using the plant photosynthesis comprehensive analysis system LI-6800 (manufactured by LI-COR, Inc.). Measurements were performed alternately on three plants at a time, a total of nine plants, treated with the stevia formulation 2 or the comparative formulation 2. The light intensity within the chamber of the plant photosynthesis comprehensive analysis system was set to 100 µmol/m²/s, 500 µmol/m²/s, or 1,000 µmol/m²/s, the CO₂ concentration to 400 µmol/mol, the temperature to 30°C, the humidity to 80%, and the air-flow rate to 800 µmol/s.

Of the measured data on the nine plants for each condition, data on two plants treated with the comparative formulation 2 were excluded from the measured results, because of a failure observed in the measuring instrument, and the other measured results were used for subsequent analysis.

Comparative analysis was performed using student's t-test between the measured results of the plants treated with the comparative formulation 2 (Comparative Example 2) and the measured results of the plants treated with the stevia formulation 2 (Example 2). The results are shown in Table 2 and Fig. 2.

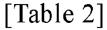

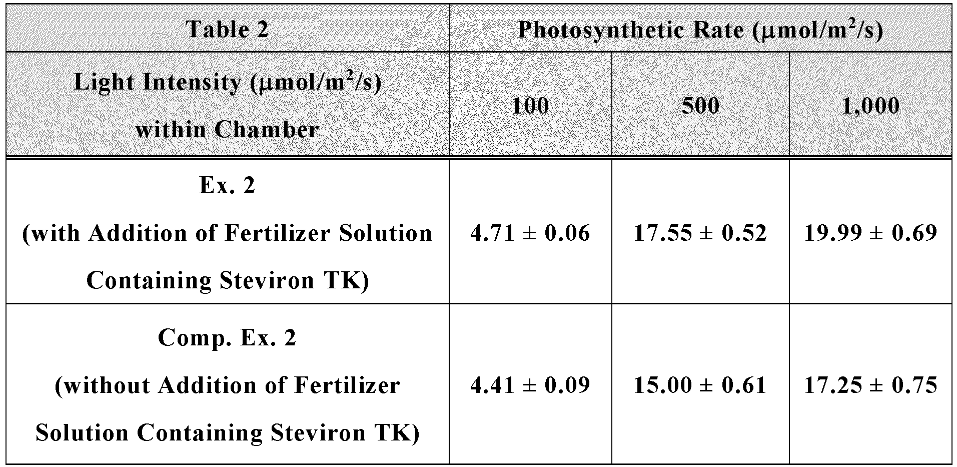

### <Results>

In Example 2 with the addition of the fertilizer solution containing Steviron TK, a statistically significant improvement in photosynthetic rate was observed at every light intensity within the chamber, as compared to Comparative Example 2 (without the addition of Steviron TK). This has revealed that the plant photosynthesis promoting agent of the present invention, which contains stevia, promotes photosynthesis of sweet potatoes.

### Text Example 3: Analysis of steviol and steviol glycosides contents in FARM A

Steviol, stevioside, and rebaudioside A contents in FARM A were analyzed by high-performance liquid chromatography (HPLC). The analytical instrument was a liquid chromatographic apparatus (manufactured by JASCO Corporation) made up of the solvent low-pressure gradient pump model PU-2089, the intelligent autosampler model AS-2051, the PDA detector model MD-2018, and the column oven CO-2067. The analytical column was L-column 2 ODS 5 µm (size: 4.6 × 250 mm, manufactured by Chemicals Evaluation and Research Institute, Japan). The mobile phase for steviol was a 40:60 mixed solution of water containing 0.1% phosphoric acid (manufactured by Wako Pure Chemical Industries, Ltd.) and acetonitrile, and the mobile phase for stevioside and rebaudioside A was a 70:30 mixed solution of water containing 0.1% phosphoric acid and acetonitrile. The flow rate was set to 1 mL/min, the column temperature was set to 40°C and the detection was set to a UV absorption spectrum at 210 nm, and elution was performed to detect and quantify the peak derived from each compound. A 10-fold dilution of FARM A was prepared, filtered and used as an analytical sample. The obtained peak area of the absorption spectrum was fitted to the approximation in the calibration curve prepared with the standard, and the concentration in the sample was calculated. The results are shown in Table 3 below.

**[Table 3]**

| **Table 3** | **Compound Name** | **Concentration (mg/g) in Product** |
|---|---|---|
| **Compound (1)** | **Steviol** | **0.04** |
| **Compound (2)** | **Stevioside** | **4.05** |
| **Compound (3)** | **Rebaudioside A** | **4.18** |

### <Results>

The results have confirmed that FARM A contains steviol and steviol glycosides.

## Claims

1. A plant photosynthesis promoting agent comprising stevia.

2. The plant photosynthesis promoting agent according to claim 1, wherein the stevia is at least one selected from the group consisting of steviol compounds, stevia extracts, and enzyme-treated stevia.

3. The plant photosynthesis promoting agent according to claim 1 or 2, wherein the stevia is at least one selected from the group consisting of steviol, stevioside, rebaudioside A, rebaudioside B, rebaudioside C, rebaudioside D, rebaudioside E, rebaudioside F, rebaudioside M, steviolbioside, rubusoside, and dulcoside.

4. The plant photosynthesis promoting agent according to claim 1 or 2, wherein the stevia is a stevia extract.

5. The plant photosynthesis promoting agent according to claim 1 or 2, wherein the stevia is enzyme-treated stevia.

6. The plant photosynthesis promoting agent according to claim 1 or 2, wherein the stevia is rebaudioside.

7. A method of promoting photosynthesis in a plant, using the plant photosynthesis promoting agent according to any one of claims 1 to 6 on a plant or in a soil or a culture medium in which the plant is grown.

8. A method of applying the plant photosynthesis promoting agent according to any one of claims 1 to 6 to a plant.
